# EUROPÄISCHE PATENTANMELDUNG

(11) **EP 1 536 550 A2**
(43) Veröffentlichungstag der Anmeldung: **01.06.2005**
(21) Anmeldenummer: 04027470.6
(22) Anmeldetag: 16.11.2004
(51) Int. Cl.: H02M 7/219

(54) **Gleichrichterschaltung**

(30) Priorität: 25.11.2003 DE 10355349; 06.05.2004 DE 102004022442
(71) Anmelder: HONEYWELL B.V., 1101 EA Amsterdam Z.O. (NL)
(72) Erfinder: Vegter, Derk, 7833BH Nieuw Amsterdam (NL)
(74) Vertreter: Sturm, Christoph, Dipl.-Ing.

(57) **Zusammenfassung**

Die Erfindung betrifft eine Gleichrichterschaltung zur Wandlung eines Wechselspannungssignals in ein Gleichspannungssignal.

Die Gleichrichterschaltung weist mindestens eine Brückenschaltung aus Transistoren (14, 15, 17, 18) und Widerständen (16, 19) auf, wobei bei positiven Signalwerten eines zu wandelnden Wechselspannungssignals ein erster Zweig der Brückenschaltung aus mindestens zwei Transistoren (14, 15) und mindestens einem Widerstand (16) durchschaltet und ein zweiter Zweig der Brückenschaltung aus ebenfalls mindestens zwei Transistoren (17, 18) und einem Widerstand (19) sperrt, und wobei bei negativen Signalwerten des zu wandelnden Wechselspannungssignals der erste Zweig (14, 15, 16) der Brückenschaltung sperrt und der zweite Zweig (17, 18, 19) der Brückenschaltung durchschaltet.

## Beschreibung

Die Erfindung betrifft eine Gleichrichterschaltung gemäß dem Oberbegriff des Anspruchs 1 bzw. 13.

Gleichrichterschaltungen dienen der Wandlung eines Wechselspannungssignals in ein Gleichspannungssignal. Gleichrichterschaltungen nach dem Stand der Technik zum Beispiel sind aus Tietze, U. und Schenk, Ch., "Halbleiter-Schaltungstechnik", Springer-Verlag, 9. Auflage, 1988, Seiten 535-542 bekannt, wobei die dort offenbarten Gleichrichterschaltungen durch einen hohen Spannungsverlust gekennzeichnet sind. Die aus dem Stand der Technik bekannten Gleichrichterschaltungen sind demnach zur Wandlung kleiner Wechselspannungen in der Größenordnung von einigen Volt, zum Beispiel in der Größenordnung von 2 bis 5 V, nicht geeignet.

Hiervon ausgehend liegt der vorliegenden Erfindung das Problem zu Grunde, eine neuartige Gleichrichterschaltung zu schaffen.

Dieses Problem wird durch eine Gleichrichterschaltung mit den Merkmalen des Anspruchs 1 gelöst. Erfindungsgemäß verfügt die Gleichrichterschaltung über mindestens eine Brückenschaltung aus Transistoren und Widerständen, wobei bei positiven Signalwerten eines zu wandelnden Wechselspannungssignals ein erster Zweig der Brückenschaltung aus mindestens zwei Transistoren und mindestens einem Widerstand durchschaltet und ein zweiter Zweig der Brückenschaltung aus ebenfalls mindestens zwei Transistoren und einem Widerstand sperrt, und wobei bei negativen Signalwerten des zu wandelnden Wechselspannungssignals der erste Zweig der Brückenschaltung sperrt und der zweite Zweig der Brückenschaltung durchschaltet. Eine erfindungsgemäße Alternative ist im unabhängigen Anspruch 13 definiert. Nach dieser Alternative sind die Widerstände durch Zenerdioden ersetzt.

Die hier vorliegende Erfindung schlägt eine Gleichrichterschaltung vor, die eine verlustarme Wandlung kleiner Wechselspannungen ermöglicht. Die erfindungsgemäße Gleichrichterschaltung kommt mit wenigen Baugruppen, im einfachsten Fall mit lediglich vier Transistoren und zwei Widerständen oder zwei Zenerdioden, aus und verfügt demnach über einen einfachen Aufbau. Sie ist besonders kostengünstig herstellbar. Die erfindungsgemäße Gleichrichterschaltung ist auf die Wandlung kleiner Wechselspannungen im Bereich von einigen Volt ausgelegt.

Nach einer bevorzugten Weiterbildung der Erfindung sind der erste Zweig und der zweite Zweig der Brückenschaltung jeweils aus zwei Transistoren und einem Widerstand oder einer Zenerdioden gebildet, wobei für jeden der beiden Zweige der Widerstand oder die Zenerdiode zwischen die Basis der jeweiligen Transistoren geschaltet ist. Die Transistoren können als bipolare Transistoren oder auch MOSFET-Transistoren ausgebildet sein.

Ein erster Transistor der ersten Zweigs ist als PNP-Transistor und ein zweiter Transistor der ersten Zweigs ist als NPN-Transistor ausgebildet. Ebenso ist ein erster Transistor der zweiten Zweigs als PNP-Transistor und ein zweiter Transistor der zweiten Zweigs als NPN-Transistor ausgebildet. An den Emittern der Transistoren liegt ein zu wandelndes Wechselspannungssignal an, wobei der Emitter des ersten Transistors (PNP-Transistor) des ersten Zweigs sowie der Emitter des zweiten Transistors (NPN-Transistor) des zweiten Zweigs an einen ersten Ausgang eines die zu wandelnde Wechselspannung bereitstellenden Generators angeschlossen sind, und wobei der Emitter des zweiten Transistors (NPN-Transistor) des ersten Zweigs und der Emitter des ersten Transistors (PNP-Transistor) des zweiten Zweigs an einen zweiten Ausgang des Generators angeschlossen sind. Der Kollektor des ersten Transistors (PNP-Transistor) des ersten Zweigs und der Kollektor ersten Transistors (PNP-Transistor) des zweiten Zweigs liegen an einem ersten Ausgang der Gleichrichterschaltung an, wohingegen der Kollektor des zweiten Transistors (NPN-Transistor) des ersten Zweigs und der Kollektor des zweiten Transistors (NPN-Transistor) des zweiten Zweigs an dem zweiten Ausgang der Gleichrichterschaltung anliegen.

Bevorzugte Weiterbildungen der Erfindung ergeben sich aus den Unteransprüchen und der nachfolgenden Beschreibung. Nachfolgend wird ein Ausführungsbeispiel der Erfindung, ohne hierauf beschränkt zu sein, anhand der Zeichnung näher erläutert. In der Zeichnung zeigt:
- Fig. 1:: ein Schaltbild einer erfindungsgemäßen Gleichrichterschaltung nach einem ersten Ausführungsbeispiel der hier vorliegenden Erfindung zur Wandlung eines von einem Generator bereitgestellten Wechselspannungssignals in ein Gleichspannungssignal; und
- Fig. 2:: ein Schaltbild einer erfindungsgemäßen Gleichrichterschaltung nach einem zweiten Ausführungsbeispiel der hier vorliegenden Erfindung zur Wandlung eines von einem Generator bereitgestellten Wechselspannungssignals in ein Gleichspannungssignal.

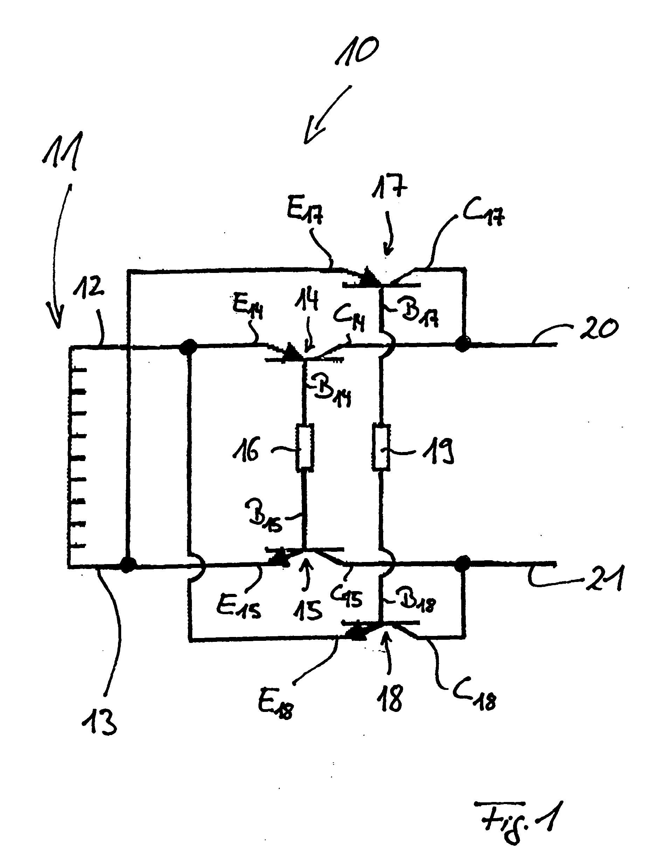

Fig. 1 zeigt eine erfindungsgemäße Gleichrichterschaltung 10 zur Gleichrichtung eines von einem Wechselspannungsgenerator 11 bereitgestellten Wechselspannungssignals bzw. Wechselstromsignals. Der Wechselspannungsgenerator 11 verfügt über zwei Ausgänge 12 und 13, wobei die vom Wechselspannungsgenerator 11 erzeugte Wechselspannung an den Ausgängen 12 und 13 des Wechselspannungsgenerators 11 bereitgestellt und der Gleichrichterschaltung 10 zugeführt wird.

Die Gleichrichterschaltung 10 der Fig. 1 ist als Brückenschaltung ausgebildet. Die Brückenschaltung des gezeigten bevorzugten Ausführungsbeispiels verfügt über insgesamt zwei Zweige, wobei ein erster Zweig der Brückenschaltung aus zwei Transistoren 14 und 15 und einem Widerstand 16 gebildet wird. Ein erster Transistor 14 des ersten Zweigs ist als PNP-Transistor und ein zweiter Transistor 15 des ersten Zweigs ist als NPN-Transistor ausgebildet. Gemäß Fig. 1 ist der Widerstand 16 des ersten Zweigs der Brückenschaltung derart mit den beiden Transistoren 14 und 15 verschaltet, dass der Widerstand 16 einerseits an die Basis B₁₄ des ersten Transistors 14 und andererseits an die Basis B₁₅ des zweiten Transistors 15 angeschlossen ist. Der Emitter E₁₄ des ersten Transistors 14 des ersten Zweigs, der als PNP-Transistor ausgebildet ist, ist gemäß Fig. 1 an den ersten Ausgang 12 des Wechselspannungsgenerators 11 angeschlossen. Der Emitter E₁₅ des zweiten Transistors 15 des ersten Zweigs der Brückenschaltung, der als NPN-Transistor ausgebildet ist, ist hingegen gemäß Fig. 1 an den zweiten Ausgang 13 des Wechselspannungsgenerators 11 angeschlossen.

Ein zweiter Zweig der Brückenschaltung wird ebenfalls von zwei Transistoren 17 und 18 und einem Widerstand 19 gebildet. Ein erster Transistor 17 des zweiten Zweigs der Gleichrichterschaltung 10 ist wiederum als PNP-Transistor und ein zweiter Transistor 18 ist wiederum als NPN-Transistor ausgebildet. Der Widerstand 19 des zweiten Zweigs der Brückenschaltung ist wiederum derart mit den beiden Transistoren 17 und 18 verschaltet, dass der Widerstand 19 einerseits an die Basis B₁₇ des ersten Transistors 17 des zweiten Zweigs und andererseits an die Basis B₁₈ des zweiten Transistors 18 des zweiten Zweigs angeschlossen ist. An den Emittern E₁₇ und E₁₈ der Transistoren 17 und 18 des zweiten Zweigs der Brückenschaltung liegt wiederum die zu wandelnde Wechselspannung an, wobei der Emitter E₁₇ des ersten Transistors 17 des zweiten Zweigs der Brückenschaltung an den zweiten Ausgang 13 des Wechselspannungsgenerators 11 und der Emitter E₁₈ des zweiten Transistors 18 des zweiten Zweigs an den ersten Ausgang 12 des Wechselspannungsgenerators 11 angeschlossen ist.

Gemäß Fig. 1 sind die Kollektoren C₁₄, C₁₅, C₁₇ und C₁₈ der Transistoren 14, 15, 17 und 18 an Ausgänge 20 und 21 der Gleichrichterschaltung 10 angeschlossen. Dabei sind der Kollektor C₁₄ des ersten Transistors 14 des ersten Zweigs sowie der Kollektor C₁₇ des ersten Transistors 17 des zweiten Zweigs an den ersten Ausgang 20 der Gleichrichterschaltung angeschlossen. Der Kollektor C₁₅ des zweiten Transistors 15 des ersten Zweigs sowie der Kollektor C₁₈ des zweiten Transistors 18 des zweiten Zweigs der Brückenschaltung sind an den zweiten Ausgang 21 der Gleichrichterschaltung 10 angeschlossen.

Die Gleichrichterschaltung 10 gemäß Fig. 1 arbeitet nun derart, dass in dem Fall, in welchen das am Ausgang 12 des Generators 11 anliegende Spannungspotential positiv gegenüber dem am Ausgang 13 anliegenden Spannungspotential ist, der erste Zweig der Brückenschaltung aus den Transistoren 14 und 15 sowie dem Widerstand 16 durchschaltet, der zweite Zweig aus den Transistoren 17 und 18 und dem Widerstand 19 hingegen sperrt. Dieser Fall entspricht dem anliegen positiver Signalwerte der zu wandelnden Wechselspannung. In diesem Fall sind demnach die Transistoren 14 und 15 durchgeschaltet, was bedeutet, dass Strom von den Emittern E₁₄ bzw. E₁₅ in Richtung auf die Kollektoren C₁₄ bzw. C₁₅ der jeweiligen Transistoren 14 und 15 fließen kann.

Ist hingegen das am Ausgang 13 des Generators 11 anliegende Spannungspotential positiv gegenüber dem am Ausgang 12 anliegenden Spannungspotential ist, liegen also negative Signalwerte des zu wandelnden Wechselspannungssignals an, so sperrt der erste Zweig aus den Transistoren 14 und 15 sowie dem Widerstand 16 und der zweite Zweig aus den Transistoren 17 und 18 und dem Widerstand 19 schaltet durch. Dies bedeutet, dass in diesem Fall die Transistoren 17 und 18 durchschalten, also Strom von deren Emittern E₁₇ bzw. E₁₈ in Richtung auf deren Kollektoren C₁₇ bzw. C₁₈ fließen kann.

Die oben beschriebene, erfindungsgemäße Gleichrichterschaltung 10 dient der Wandlung solcher Wechselspannungen in eine Gleichspannung, die in der Größenordnung von einigen Volt liegen. So muss die vom Wechselspannungsgenerator 11 bereitgestellte Wechselspannung mindestens in etwa den zweifachen Betrag der Basis-Emitter-Durchlassspannung eines Transistors zuzüglich des Spannungsabfalls am Widerstand betragen, also insgesamt mindestens 1,5 Volt betragen. Weiterhin darf die vom Wechselspannungsgenerator 11 bereitgestellte, zu wandelnde Wechselspannung nicht größer sein als die maximal zulässige Basis-Emitter-Sperrspannung der Transistoren, die bei in etwa 10 Volt liegt.

Die erfindungsgemäße Gleichrichterschaltung 10 ist demnach speziell auf die Gleichrichtung von Wechselspannungen in der Größenordnung von einigen Volt ausgelegt. Der maximal auftretende Spannungsabfall bzw. Spannungsverlust, der sich an der erfindungsgemäßen Gleichrichterspannung 10 einstellt, liegt unterhalb von 100 mV. Daraus folgt, dass mit der erfindungsgemäßen Gleichrichterschaltung 10 ein extrem geringer Spannungsverlust bei der Gleichrichtung der Wechselspannung realisiert werden kann.

Es sei darauf hingewiesen, dass die Dimensionierung der Transistoren 14, 15, 17 und 18 sowie Widerstände 16 und 19 derart vorzunehmen ist, dass die Transistoren im Sättigungsbereich betrieben werden. Der Basisstrom der Transistoren 14, 15, 17 und 18 muss demnach groß genug sein, um den Sättigungsbetrieb der Transistoren 14, 15, 17 und 18 zu gewährleisten.

Die erfindungsgemäße Gleichrichterschaltung 10 findet bevorzugt Verwendung in Anwendungsfällen, in welchen kleine Wechselspannungen in der Größenordnung von einigen Volt in eine Gleichspannung zu wandeln sind. Ein derartiger Anwendungsfall liegt zum Beispiel bei Wassererwärmungseinrichtungen vor, in welchen ein Generator bedingt durch eine Wasserströmung Wechselspannung erzeugt, sobald zum Beispiel durch Öffnen eines Wasserhahns die Wasserströmung verursacht wird. Derartige Generatoren in Wassererwärmungseinrichtungen erzeugen Wechselspannungen in der Größenordung von einigen Volt.

Die erfindungsgemäße Gleichrichterschaltung kann weiterhin in batteriebetriebenen Einrichtungen Verwendung finden, um unabhängig von der Einbauposition der Batterie den Betrieb solcher Einrichtungen zu ermöglichen. So ist es aus dem Stand der Technik bekannt, dass zum Beispiel Fernbedienungen nur dann arbeiten, wenn Batterien in der richtigen Position in die Fernbedienung eingelegt werden. Ist in die Fernbedienung jedoch die erfindungsgemäße Gleichrichterschaltung 10 integriert, so kann unabhängig von der Einbauposition der Batterien die Fernbedienung betrieben werden.

Über die obigen Anwendungsfälle hinaus sind selbstverständlich weitere Anwendungsfälle für die erfindungsgemäße Gleichrichterschaltung vorstellbar. Ein Hauptvorteil der erfindungsgemäßen Gleichrichterschaltung liegt darin, dass dieselbe mit wenigen Baugruppen auskommt und daher kostengünstig hergestellt werden kann. Weiterhin zeichnet sich dieselbe durch einen geringen Spannungsverlust bei der Gleichrichtung einer Wechselspannung aus.

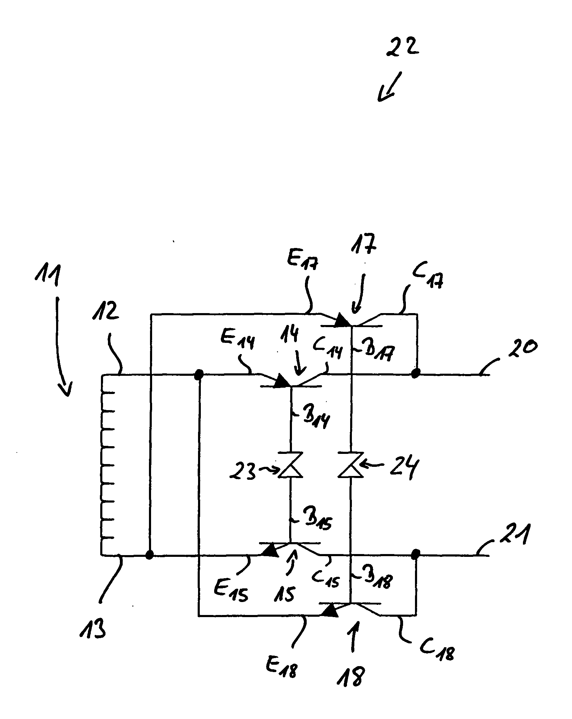

Eine Alternative zur erfindungsgemäßen Gleichrichterschaltung 10 der Fig. 1 zeigt die erfindungsgemäße Gleichrichterschaltung 22 der Fig. 2. In der Gleichrichterschaltung 22 der Fig. 2 sind die Widerstände 16 und 19 der Gleichrichterschaltung 10 der Fig. 1 durch Zenerdioden 23 und 24 ersetzt. Sonst stimmen die beiden Gleichrichterschaltungen 10 und 22 überein. Zur Vermeidung unnötiger Wiederholungen werden daher für gleiche Baugruppen gleiche Bezugsziffern verwendet und es wird auf die diesbezüglichen Ausführungen zur Gleichrichterschaltung 10 der Fig. 1 verwiesen. Durch die Verwendung der Zenerdioden 23 und 24 kann an den Ausgängen 20 und 21 eine konstantere Gleichspannung bereitgestellt werden als bei Verwendung der Widerstände 16, falls der Wechselspannungsgenerator 11 einen Widerstand aufweist. Die Zenerdioden 23 und 24 sind vorzugsweise als Niederspannungs-Zenerdioden ausgeführt.

### Bezugszeichenliste

- 10: Gleichrichterschaltung
- 11: Wechselspannungsgenerator
- 12: Ausgang
- 13: Ausgang
- 14: Transistor
- B₁₄: Basis des Transistors 14
- E₁₄: Emitter des Transistors 14
- C₁₄: Kollektor des Transistors 14
- 15: Transistor
- B₁₅: Basis des Transistors 15
- E₁₅: Emitter des Transistors 15
- C₁₅: Kollektor des Transistors 15
- 16: Widerstand
- 17: Transistor
- B₁₇: Basis des Transistors 17
- E₁₇: Emitter des Transistors 17
- C₁₇: Kollektor des Transistors 17
- 18: Transistor
- B₁₈: Basis des Transistors 18
- E₁₈: Emitter des Transistors 18
- C₁₈: Kollektor des Transistors 18
- 19: Widerstand
- 20: Ausgang
- 21: Ausgang
- 22: Gleichrichterschaltung
- 23: Zenerdiode
- 24: Zenerdiode

## Patentansprüche

1. Gleichrichterschaltung zur Wandlung eines Wechselspannungssignals in ein Gleichspannungssignal, **gekennzeichnet durch** mindestens eine Brückenschaltung aus Transistoren (14, 15, 17, 18) und Widerständen (16, 19), wobei bei positiven Signalwerten eines zu wandelnden Wechselspannungssignals ein erster Zweig der Brückenschaltung aus mindestens zwei Transistoren (14, 15) und mindestens einem Widerstand (16) durchschaltet und ein zweiter Zweig der Brückenschaltung aus ebenfalls mindestens zwei Transistoren (17, 18) und einem Widerstand (19) sperrt, und wobei bei negativen Signalwerten des zu wandelnden Wechselspannungssignals der erste Zweig (14, 15, 16) der Brückenschaltung sperrt und der zweite Zweig (17, 18, 19) der Brückenschaltung durchschaltet.

2. Gleichrichterschaltung nach Anspruch 1, **dadurch gekennzeichnet, dass** der erste Zweig der Brückenschaltung aus zwei Transistoren (14, 15) und einem Widerstand (16) gebildet ist, wobei der Widerstand (16) zwischen die jeweilige Basis (B₁₄, B₁₅) der beiden Transistoren (14, 15) geschaltet ist.

3. Gleichrichterschaltung nach Anspruch 2, **dadurch gekennzeichnet, dass** ein erster Transistor (14) der ersten Zweigs als PNP-Transistor und ein zweiter Transistor (15) der ersten Zweigs als NPN-Transistor ausgebildet ist, und dass ein zu wandelndes Wechselspannungssignal an den Emittern (E₁₄, E₁₅) der beiden Transistoren (14, 15) anliegt.

4. Gleichrichterschaltung nach Anspruch 3, **dadurch gekennzeichnet, dass** der Emitter (E₁₄) des ersten Transistors (14) an einen ersten Ausgang (12) einer Wechselspannungsquelle (11) und der Emitter (E₁₅) des zweiten Transistors (15) an einen zweiten Ausgang (13) der Wechselspannungsquelle (11) angeschlossen ist.

5. Gleichrichterschaltung nach einem oder mehreren der Ansprüche 1 bis 4, **dadurch gekennzeichnet, dass** der zweite Zweig der Brückenschaltung aus zwei Transistoren (17, 18) und einem Widerstand (19) gebildet ist, wobei der Widerstand (19) zwischen die jeweilige Basis (B₁₇, B₁₈) der beiden Transistoren (17, 18) geschaltet ist.

6. Gleichrichterschaltung nach Anspruch 5, **dadurch gekennzeichnet, dass** ein erster Transistor (17) der zweiten Zweigs als PNP-Transistor und ein zweiter Transistor (18) der zweiten Zweigs als NPN-Transistor ausgebildet ist, wobei ein zu wandelndes Wechselspannungssignal an den Emittern (E₁₇, E₁₈) der beiden Transistoren (17, 18) anliegt.

7. Gleichrichterschaltung nach Anspruch 6, **gekennzeichnet durch** der Emitter (E₁₇) des ersten Transistors (17) an dem zweiten Ausgang (13) der Wechselspannungsquelle (11) und der Emitter (E₁₈) des zweiten Transistors (18) an dem ersten Ausgang (12) der Wechselspannungsquelle (11) angeschlossen ist.

8. Gleichrichterschaltung nach einem oder mehreren der Ansprüche 1 bis 7, **dadurch gekennzeichnet, dass** Kollektoren (C₁₄, C₁₅, C₁₇, C₁₈) der Transistoren (14, 15, 17, 18) an die Ausgänge (20, 21) der Gleichrichterschaltung angeschlossen sind, wobei der Kollektor (C₁₄) des ersten Transistors (14) des ersten Zweigs und der Kollektor (C₁₇) des ersten Transistors (17) des zweiten Zweigs an einen ersten Ausgang (20) und der Kollektor (C₁₅) des zweiten Transistors (15) des ersten Zweigs und der Kollektor (C₁₈) der zweiten Transistors (18) der zweiten Zweigs an einen zweiten Ausgang (21) angeschlossen sind.

9. Gleichrichterschaltung nach einem oder mehreren der Ansprüche 1 bis 8, **dadurch gekennzeichnet, dass** die Gleichrichterschaltung der Wandlung einer Wechselspannung dient, welche größer ist als die zweifache Basis-Emitter-Durchlassspannung der Transistoren.

10. Gleichrichterschaltung nach einem oder mehreren der Ansprüche 1 bis 9, **dadurch gekennzeichnet, dass** die Gleichrichterschaltung der Wandlung einer Wechselspannung dient, welche kleiner ist als die maximal zulässige Basis-Emitter-Sperrspannung der Transistoren.

11. Gleichrichterschaltung nach einem oder mehreren der Ansprüche 1 bis 10, **dadurch gekennzeichnet, dass** die Gleichrichterschaltung der Wandlung einer Wechselspannung dient, welches größer ist als in etwa 1,5 Volt und welches kleiner ist als in etwa 10 Volt.

12. Gleichrichterschaltung nach einem oder mehreren der Ansprüche 1 bis 10, **dadurch gekennzeichnet, dass** die Widerstände (16, 19) derart dimensioniert sind, dass die Transistoren (14, 15, 17, 18) im Sättigungsbereich arbeiten.

13. Gleichrichterschaltung zur Wandlung eines Wechselspannungssignals in ein Gleichspannungssignal, **gekennzeichnet durch** mindestens eine Brückenschaltung aus Transistoren (14, 15, 17, 18) und Zenerdioden (23, 24), wobei bei positiven Signalwerten eines zu wandelnden Wechselspannungssignals ein erster Zweig der Brückenschaltung aus mindestens zwei Transistoren (14, 15) und mindestens einer Zenerdiode (23) durchschaltet und ein zweiter Zweig der Brückenschaltung aus ebenfalls mindestens zwei Transistoren (17, 18) und einer Zenerdiode (24) sperrt, und wobei bei negativen Signalwerten des zu wandelnden Wechselspannungssignals der erste Zweig (14, 15, 16) der Brückenschaltung sperrt und der zweite Zweig (17, 18, 19) der Brückenschaltung durchschaltet.

14. Gleichrichterschaltung nach Anspruch 13, **dadurch gekennzeichnet, dass** der erste Zweig der Brückenschaltung aus zwei Transistoren (14, 15) und einer Zenerdiode (23) gebildet ist, wobei die Zenerdiode (23) zwischen die jeweilige Basis (B₁₄, B₁₅) der beiden Transistoren (14, 15) geschaltet ist.

15. Gleichrichterschaltung nach Anspruch 14, **dadurch gekennzeichnet, dass** ein erster Transistor (14) der ersten Zweigs als PNP-Transistor und ein zweiter Transistor (15) der ersten Zweigs als NPN-Transistor ausgebildet ist, und dass ein zu wandelndes Wechselspannungssignal an den Emittern (E₁₄, E₁₅) der beiden Transistoren (14, 15) anliegt.

16. Gleichrichterschaltung nach Anspruch 15, **dadurch gekennzeichnet, dass** der Emitter (E₁₄) des ersten Transistors (14) an einen ersten Ausgang (12) einer Wechselspannungsquelle (11) und der Emitter (E₁₅) des zweiten Transistors (15) an einen zweiten Ausgang (13) der Wechselspannungsquelle (11) angeschlossen ist.

17. Gleichrichterschaltung nach einem oder mehreren der Ansprüche 13 bis 16, **dadurch gekennzeichnet, dass** der zweite Zweig der Brückenschaltung aus zwei Transistoren (17, 18) und einer Zenerdiode (24) gebildet ist, wobei die Zenerdiode (24) zwischen die jeweilige Basis (B₁₇, B₁₈) der beiden Transistoren (17, 18) geschaltet ist.

18. Gleichrichterschaltung nach Anspruch 17, **dadurch gekennzeichnet, dass** ein erster Transistor (17) der zweiten Zweigs als PNP-Transistor und ein zweiter Transistor (18) der zweiten Zweigs als NPN-Transistor ausgebildet ist, wobei ein zu wandelndes Wechselspannungssignal an den Emittern (E₁₇, E₁₈) der beiden Transistoren (17, 18) anliegt.

19. Gleichrichterschaltung nach Anspruch 18, **gekennzeichnet durch** der Emitter (E₁₇) des ersten Transistors (17) an dem zweiten Ausgang (13) der Wechselspannungsquelle (11) und der Emitter (E₁₈) des zweiten Transistors (18) an dem ersten Ausgang (12) der Wechselspannungsquelle (11) angeschlossen ist.

20. Gleichrichterschaltung nach einem oder mehreren der Ansprüche 13 bis 19, **dadurch gekennzeichnet, dass** Kollektoren (C₁₄, C₁₅, C₁₇, C₁₈) der Transistoren (14, 15, 17, 18) an die Ausgänge (20, 21) der Gleichrichterschaltung angeschlossen sind, wobei der Kollektor (C₁₄) des ersten Transistors (14) des ersten Zweigs und der Kollektor (C₁₇) des ersten Transistors (17) des zweiten Zweigs an einen ersten Ausgang (20) und der Kollektor (C₁₅) des zweiten Transistors (15) des ersten Zweigs und der Kollektor (C₁₈) der zweiten Transistors (18) der zweiten Zweigs an einen zweiten Ausgang (21) angeschlossen sind.

21. Gleichrichterschaltung nach einem oder mehreren der Ansprüche 13 bis 20, **dadurch gekennzeichnet, dass** die Gleichrichterschaltung der Wandlung einer Wechselspannung dient, welche größer ist als die zweifache Basis-Emitter-Durchlassspannung der Transistoren.

22. Gleichrichterschaltung nach einem oder mehreren der Ansprüche 13 bis 21, **dadurch gekennzeichnet, dass** die Gleichrichterschaltung der Wandlung einer Wechselspannung dient, welche kleiner ist als die maximal zulässige Basis-Emitter-Sperrspannung der Transistoren.
